# EUROPEAN PATENT APPLICATION

(11) **EP 4 625 508 A2**
(43) Date of publication of application: **01.10.2025**
(21) Application number: 25158015.5
(22) Date of filing: 14.02.2025
(51) Int. Cl.: H01M 4/04, H01M 4/13, H01M 4/66, H01M 4/70

(54) **DRY ELECTRODE AND DRY ELECTRODE MANUFACTURING METHOD**

(30) Priority: 29.03.2024 KR 20240043583
(71) Applicant: SAMSUNG SDI CO., LTD., Yongin-si, Gyeonggi-do 17084 (KR)
(72) Inventor: PARK, Gwangwon, 17084 Yongin-si (KR); LEE, Seunghun, 17084 Yongin-si (KR); JUNG, Daeun, 17084 Yongin-si (KR); MOON, Jeunggi, 17084 Yongin-si (KR); LEE, Jinhyon, 17084 Yongin-si (KR); CHOI, Jongsup, 17084 Yongin-si (KR)
(74) Representative: Marks & Clerk LLP

(57) **Abstract**

A dry electrode includes a current collector including a surface having protrusions and depressions and a free-standing film including an active material, a conductive material, and a fiberized binder. The free-standing film is laminated directly onto the surface of the current collector having protrusions and depressions.

## Description

### BACKGROUND

### (a) Field

This description relates to a dry electrode and a dry electrode manufacturing method.

### (b) Description of the Related Art

A rechargeable battery is a battery that may be repeatedly charged and discharged.

Recently, there is an increasing need for dry electrodes for rechargeable batteries, which do not use solvents. A conventional dry electrode includes an active material, a conductive material, a free-standing film including a fiberized binder, a current collector, and an adhesive layer that adheres between the current collector and the free-standing film. However, because the conventional dry electrode adhesive layer is coated on the current collector, there is a problem in that battery capacity is lost due to a decrease in the amount of active material in the total thickness, weight, and volume of the entire dry electrode, which also results in increased manufacturing costs.

### SUMMARY

An embodiment provides a dry electrode and a method of manufacturing a dry electrode in which manufacturing costs are reduced and the dry electrode thickness, weight, and battery capacity are maximized.

An embodiment provides a dry electrode including a current collector including a surface having protrusions and depressions, and a free-standing film including an active material, a conductive material, and a fiberized binder and laminated directly onto the surface of the current collector having protrusions and depressions.

The current collector may include a polymer layer; a primer layer positioned on a surface of the polymer layer, and a metal layer positioned on a surface of the primer layer surface and including the surface having protrusions and depressions.

The metal layer may be laminated onto the primer layer.

The surface of the current collector having protrusions and depressions may be etched.

The metal layer may be deposited on the primer layer.

The surface having protrusions and depressions may be etched.

The metal layer may be formed by providing a seed on the surface of the primer layer and then electrolytically plating the seed.

The surface having protrusions and depressions may have a surface roughness that corresponds to the placement of the seed.

The primer layer may include at least one of polymer and metal.

The surface having protrusions and depressions may have a surface roughness Ra from 0.1 µm to 20 µm.

A method of manufacturing a dry electrode according to an embodiment includes forming a current collector surface having protrusions and depressions and directly laminating a free-standing film including an active material, a conductive material, and a fiberized binder on the surface of the current collector that includes the protrusions and depressions.

Forming the current collector surface having protrusions and depressions may include forming a primer layer on a polymer layer surface and forming a metal layer including the surface having protrusions and depressions on the primer layer surface.

Forming the metal layer including the surface having protrusions and depressions on the primer layer surface may include laminating the metal layer on the primer layer.

Forming the metal layer including the surface having protrusions and depressions on the primer layer surface may further include etching the metal layer to form the surface having protrusions and depressions.

Forming the metal layer including the surface having protrusions and depressions on the primer layer surface may include depositing the metal layer on the primer layer.

Forming the metal layer including the surface having protrusions and depressions on the primer layer surface may further include etching the metal layer to form the surface having protrusions and depressions.

Forming the metal layer including the surface having protrusions and depressions on the primer layer surface may include providing a seed on the surface of the primer layer and electrolytically plating the seed on the surface of the primer layer to form the metal layer.

The surface having protrusions and depressions may have a surface roughness that corresponds to the arrangement of the seed.

The primer layer may include at least one of a polymer and a metal.

The surface having protrusions and depressions may have a surface roughness Ra from 0.1 µm to 20 µm.

At least some of the above and other features of the invention are set out in the claims.

According to an embodiment, the dry electrode and the dry electrode manufacturing method are provided that reduce manufacturing costs and maximize battery capacity per the thickness, the weight, and the volume of the dry electrode.

### BRIEF DESCRIPTION OF THE DRAWINGS

FIG. 1 is a cross-sectional view showing a dry electrode according to an embodiment.
FIG. 2 is a SEM photo showing an example of a surface having protrusions and depressions of a current collector of a dry electrode according to an embodiment.
FIG. 3 is a SEM photo showing an example of an interface between a current collector of a dry electrode and a free-standing film according to an embodiment.
FIG. 4 is a cross-sectional view showing a dry electrode according to another embodiment.
FIG. 5 is a SEM photo showing an example of an interface between a current collector of a dry electrode and a free-standing film according to an embodiment.
FIG. 6 is a flowchart showing a method of manufacturing a dry electrode according to another embodiment.
FIG. 7 is a cross-sectional view showing an example of a dry electrode according to another embodiment.
FIG. 8 is a cross-sectional view showing another example of a dry electrode according to another embodiment.
FIG. 9 and FIG. 10 are cross-sectional views showing another example of a dry electrode according to another embodiment.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways without departing from the scope of the present disclosure.

In addition, unless explicitly stated to the contrary, the word "comprise," and variations such as "comprises" or "comprising," will be understood to imply the inclusion of stated elements but not the exclusion of any other elements.

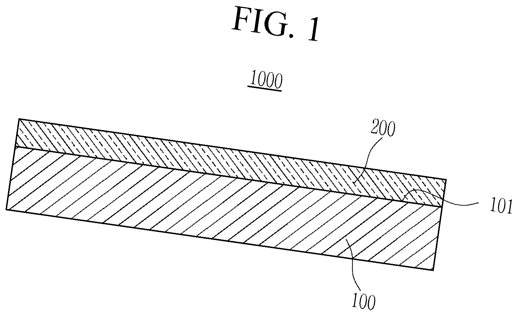

A dry electrode according to an embodiment is described with reference to FIG. 1 to FIG. 3.

FIG. 1 is a cross-sectional view showing a dry electrode according to an embodiment.

Referring to FIG. 1, a dry electrode 1000 according to an embodiment includes a current collector 100 and a free-standing film 200. The current collector 100 is directly laminated with the free-standing film 200. The current collector 100 includes various known conducting materials such as copper, aluminium, stainless steel, silver, and carbon nanotubes. But the current collector 100 is not limited to these materials and may include various other known current collector materials.

The current collector 100 includes a surface having protrusions and depressions 101. The surface having protrusions and depressions 101 of the current collector 100 is in direct contact with the free-standing film 200. The surface having protrusions and depressions 101 of the current collector 100 forms an interface with the free-standing film 200. The surface having protrusions and depressions 101 of the current collector 100 may be formed by surface-treating the surface of the current collector 100. Here, the surface treatment forming the surface having protrusions and depressions 101 of the current collector 100 may include a dry etching, a wet etching, an electrolytic etching, a crystal growth, etc.

The dry etching to form the surface having protrusions and depressions 101 of the current collector 100 may include using a plasma formed by ionizing argon and then accelerating it to etch the surface of the current collector, but the present disclosure is not limited thereto.

The wet etching to form the surface having protrusions and depressions 101 of the current collector 100 may include the use of an acid solution that includes at least one of nitric acid, sulfuric acid, hydrochloric acid, etc. to etch the surface of the current collector, but the present disclosure is not limited thereto.

The electrolytic etching to form the surface having protrusions and depressions 101 of the current collector 100 may include placing the current collector 100 inside an electrolyte solution and applying a voltage to electrochemically etch it, but the present disclosure is not limited thereto.

The crystal growth forming the surface having protrusions and depressions 101 of the current collector 100 may be performed by attaching a monocrystalline seed to the surface of the current collector 100 and using chemical vapor deposition (CVD), physical vapor deposition (PVD), etc. for growing the monocrystalline seed, but the present disclosure is not limited thereto.

The surface having protrusions and depressions 101 of the current collector 100 may have a surface roughness (Ra) ranging from 0.1 µm to 20 µm, but the present disclosure is not limited thereto.

Surface roughness (Ra) may be measured using various other known surface roughness measuring devices or various other known surface roughness measuring methods.

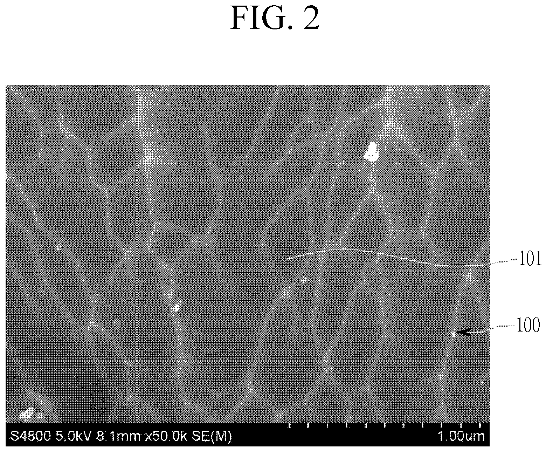

FIG. 2 is an SEM photo showing an example of a surface having protrusions and depressions of a current collector of a dry electrode according to an embodiment. Referring to FIG. 2, as an example of the surface having protrusions and depressions 101 of the current collector 100, it can be seen that the surface having protrusions and depressions 101 of the current collector 100 includes uneven shapes.

Referring again to FIG. 1, the free-standing film 200 is directly laminated on the surface having protrusions and depressions 101 of the current collector 100. The free-standing film 200 is in direct contact with the surface having protrusions and depressions of the current collector 100, and no other layers are positioned between the free-standing film 200 and the current collector 100. The free-standing film 200 includes an active material, a conductive material, and a fiberized binder, and the active material and the conductive material may be supported in a film form by the fiberized binder, but the present disclosure is not limited thereto. The free-standing film 200 may be made in the form of a film by supplying a dry powder mixed with an active material, a conductive material, and a fiberized binder through a kneading process to a calendaring roll that performs calendaring, but the present disclosure is not limited thereto.

The active material included in the free-standing film 200 may include various known electrode active materials such as nickel cobalt aluminium (NCA). The conductive material may include a variety of known conductive materials such as at least one of Ketjen black and carbon nanotubes. The fiberized binder may include various known fiberized binders such as PTFE (polytetrafluoroethylene). However, the present disclosure is not limited to such materials.

While the free-standing film 200 itself has no adhesive force, as the active material and the conductive material supported by the fiberized binder are fixed to an uneven structure of the surface having protrusions and depressions 101 of the current collector 100, the free-standing film 200 may be laminated directly on the surface having protrusions and depressions 101 of the current collector 100.

Rather than the free-standing film 200 being laminated on the current collector 100 by increasing the surface area of the surface having protrusions and depressions 101 of the current collector 100, the active material and the conductive material supported by the fiberized binder of the free-standing film 200 are fixed to the uneven structure on the surface having protrusions and depressions 101 of the current collector 100, so that the free-standing film 200 is directly laminated on the surface having protrusions and depressions 101 of the current collector 100.

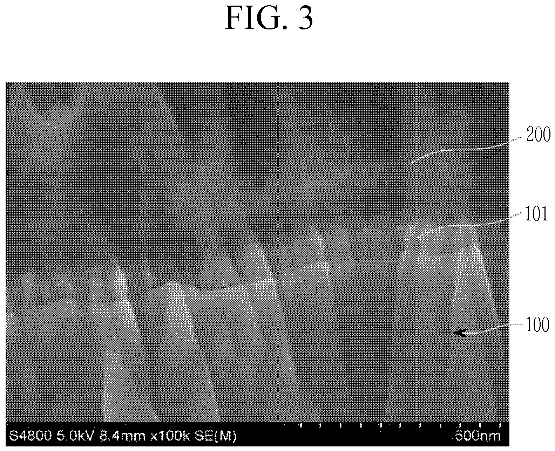

FIG. 3 is an SEM photo showing an example of an interface between a current collector of a dry electrode and a free-standing film according to an embodiment.

Referring to FIG. 3, as an example of the interface between the surface having protrusions and depressions 101 of the current collector 100 and the free-standing film 200, it can be seen that there is direct lamination in the interface between the surface of the current collector 100 having protrusions and depressions 101 of the current collector 100 and the free-standing film 200. As such, in the dry electrode 1000 according to an embodiment, the free-standing film 200 is directly laminated on the surface having protrusions and depressions 101 of the current collector 100, thereby eliminating the need for a process of coating the current collector 100 with an adhesive layer and also reducing the amount of an adhesive layer coating that is used. Thus, the cost of manufacturing the dry electrode may be reduced. In addition, as the free-standing film 200 is directly laminated on the surface of the current collector 100 having protrusions and depressions 101 and as there is no need for the adhesive layer between the current collector 100 and the free-standing film 200, battery capacity is maximized because the amount of the active material included in the free-standing film 200 does not decrease across the entire thickness of the dry electrode 1000. Thus, the dry electrode 1000 is maximized in thickness, weight, and volume while the cost of manufacturing the dry electrode 100 is reduced.

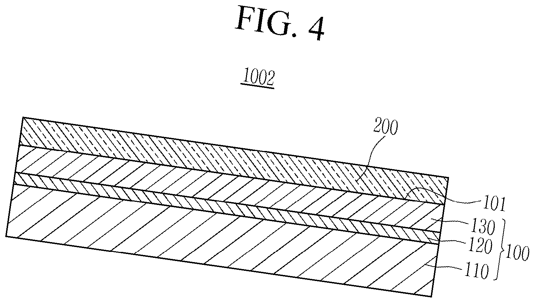

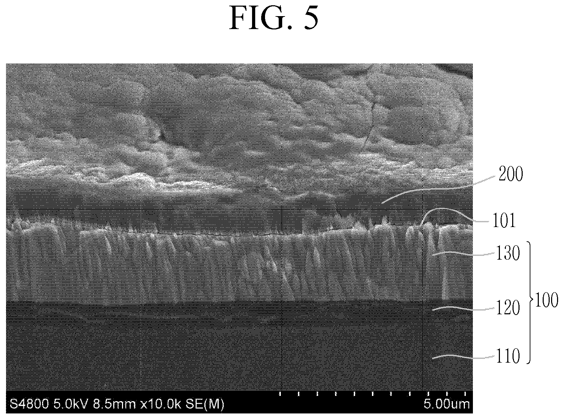

A dry electrode according to another embodiment is described with reference to FIG. 4 and FIG. 5. The following describes parts that are different from the dry electrode according to the above-described embodiment.

FIG. 4 is a cross-sectional view showing a dry electrode according to another embodiment.

Referring to FIG. 4, a dry electrode 1002 includes a current collector 100 and a free-standing film 200. The current collector 100 includes a polymer layer 110, a primer layer 120, and a metal layer 130.

The polymer layer 110 may include various known polymers such as polypropylene (PP), polyethyleneterephthalate (PET), and polyimide (PI). The polymer layer 110 may support the metal layer 130.

The primer layer 120 is positioned on the surface of the polymer layer 110. The primer layer 120 may be coated on the surface of the polymer layer 110. The primer layer 120 may include at least one of various known polymers and metals.

The metal layer 130 is positioned on the surface of the primer layer 120. The metal layer 130 is in direct contact with the primer layer 120. The metal layer 130 may include various known metals such as copper, aluminium, stainless steel, and silver. The metal layer 130 may be laminated on the primer layer 120. The metal layer 130 may be formed by laminating a metal foil to the primer layer 120, which is formed to adhere to the metal foil, but the present disclosure is not limited thereto. As another example, the metal layer 130 may be deposited on the primer layer 120. The metal layer 130 may be deposited on the primer layer 120 by a deposition process such as a chemical vapor deposition (CVD), a physical vapor deposition (PVD), or an atomic layer deposition (ALD). As yet another example, the metal layer 130 may be positioned on the surface of the primer layer 120 by forming a seed on the surface of the primer layer 120 and then electrolytic plating.

The metal layer 130 includes a surface having protrusions and depressions 101. The surface having protrusions and depressions 101 of the metal layer 130 is in direct contact with the free-standing film 200. The surface having protrusions and depressions 101 of the metal layer 130 forms an interface with the free-standing film 200. The protrusions and depressions 101 may be formed by the surface treatment of the surface of the metal layer 130. Here, the surface treatment that forms protrusions and depressions 101 of the metal layer 130 may include a dry etching, a wet etching, an electrolytic etching, a crystal growth, etc.

The dry etching to form protrusions and depressions 101 in the metal layer 130 may include dry etching the surface of the metal layer 130 by using a plasma formed by ionizing argon and then accelerating it to etch the metal layer 130, but the present disclosure is not limited thereto.

The wet etching to form the surface having protrusions and depressions 101 of the metal layer 130 may include the use of an acid solution that includes at least one of nitric acid, sulfuric acid, hydrochloric acid, etc. to etch the metal layer, but the present disclosure is not limited thereto.

The electrolytic etching to form the surface having protrusions and depressions 101 of the metal layer 130 may include placing the metal layer 130 inside an electrolyte solution and applying a voltage to electrochemically etch it, but the present disclosure is not limited thereto.

The crystal growth forming the surface having protrusions and depressions 101 of the metal layer 130 may be performed by attaching a monocrystalline seed to the surface of the metal layer 130 and using a CVD, a PVD, etc. for growing the monocrystalline seed, but the present disclosure is not limited thereto.

The surface having protrusions and depressions 101 of the metal layer 130 may be formed when the metal layer 130 is electrolytically plated on the surface of the primer layer 120. For example, the surface having protrusions and depressions 101 of the metal layer 130 may be formed by controlling the electrolytic plating condition when the metal layer 130 is formed on the surface of the primer layer 120 by electrolytic plating after forming a seed on the surface of the primer layer 120. The surface having protrusions and depressions 101 of the metal layer 130 may have a surface roughness corresponding to the arrangement of the seed formed on the surface of the primer layer 120. In particular, the surface having protrusions and depressions 101 of the metal layer 130 may have a surface roughness Ra from 0.1 µm to 20 µm, but the present disclosure is not limited thereto.

The free-standing film 200 is directly laminated on the surface having protrusions and depressions 101 of the metal layer 130. The free-standing film 200 is in direct contact with the surface having protrusions and depressions 101 of the metal layer 130, and no other layers are positioned between the free-standing film 200 and the metal layer 130. The free-standing film 200 includes an active material, a conductive material, and a fiberized binder, and the active material and the conductive material may be supported in a film form by the fiberized binder, but the present disclosure is not limited to this.

The free-standing film 200 may be provided in the form of a film by supplying a dry powder mixed with an active material, a binder, and a fiberized binder through a kneading process to a calendaring roll that performs calendaring, but the present disclosure is not limited thereto.

The active material included in the free-standing film 200 may include various known electrode active materials such as nickel cobalt aluminium (NCA). The conductive material may include a variety of known conductive materials such as at least one of Ketjen black and carbon nanotube, and the fiberized binder may include various known fiberized binders such polytetrafluoroethylene (PTFE). However, the present disclosure is not limited to such materials.

While the free-standing film 200 itself has no adhesive force, as the active material and the conductive material supported by the fiberized binder are fixed to an uneven structure on the surface having protrusions and depressions 101 of the metal layer 130, the free-standing film 200 may be laminated directly on the surface having protrusions and depressions 101 of the metal layer 130.

Rather than the free-standing film 200 being laminated on the metal layer 130 by increasing the surface area of the surface having protrusions and depressions 101 of the metal layer 130, the active material and the conductive material supported by the fiberized binder of the free-standing film 200 are fixed to the uneven structure on the surface having protrusions and depressions 101 of the metal layer 130, so that the free-standing film 200 is directly laminated on the surface having protrusions and depressions 101 of the metal layer 130.

FIG. 5 is an SEM photo showing an example of an interface between a current collector of a dry electrode and a free-standing film according to another embodiment of the present disclosure.

Referring to FIG. 5, the interface can be seen between the surface having protrusions and depressions 101 of the metal layer 130 of the current collector 100 that includes the polymer layer 110, the primer layer 120, and the metal layer 130, and the free-standing film 200. It may be confirmed that the interface between the surface having protrusions and depressions 101 of the metal layer 130 and the free-standing film 200 is directly laminated.

For example, in the dry electrode 1002 according to another embodiment, the free-standing film 200 is directly laminated on the surface having protrusions and depressions 101 of the metal layer 130 of the current collector 100, so there is no need for a process for coating an adhesive layer on the metal layer 130, whereby an electrode manufacturing cost may be reduced.

In the dry electrode 1002 according to another embodiment, the free-standing film 200 is directly laminated on the surface having protrusions and depressions 101 of the metal layer 130. As such, there is no need for an adhesive layer between the metal layer 130 and the free-standing film 200, meaning that battery capacity may be maximized because the amount of the active material included in the free-standing film 200 does not decrease across the entire thickness of dry electrode 1002. A dry electrode 1002 is thereby provided with maximized dry electrode thickness, weight, and volume and reduced manufacturing costs.

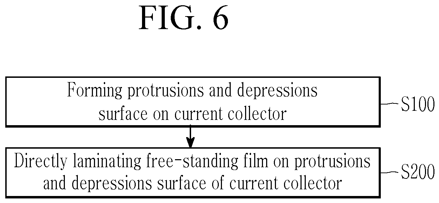

A manufacturing method of a dry electrode according to another embodiment will be described with reference to FIG. 6 to FIG. 10. In addition, at least one of the dry electrodes according to the above-described embodiments may be manufactured using the manufacturing method described herein.

FIG. 6 is a flowchart showing a method of manufacturing a dry electrode according to an embodiment of the disclosure.

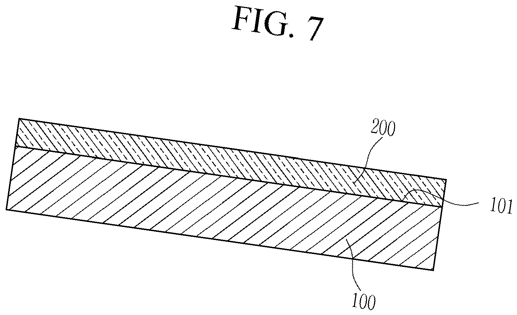

First, referring to FIG. 6, a surface having protrusions and depressions is formed on a current collector (S100). Referring to FIG. 7, the surface of the current collector 100 is etched to form a surface having protrusions and depressions 101. The surface of the current collector 100 may be dry etched using the plasma formed by ionizing and accelerating argon to form the surface having protrusions and depressions 101 on the current collector 100. As another example, the surface having protrusions and depressions 101 may be formed on the current collector 100 by wet etching the surface of the current collector 100 using an acid solution including at least one of nitric acid, sulfuric acid, hydrochloric acid, etc. As yet another example, the current collector 100 may be placed in an electrolyte solution, a voltage is applied, and electrochemical etching is performed to form the surface having protrusions and depressions 101 on the current collector 100. As a further example, the surface having protrusions and depressions 101 may be formed on the current collector 100 by attaching a monocrystalline seed to the surface of the current collector 100 and growing the monocrystalline seed by using CVD, PVD or the like.

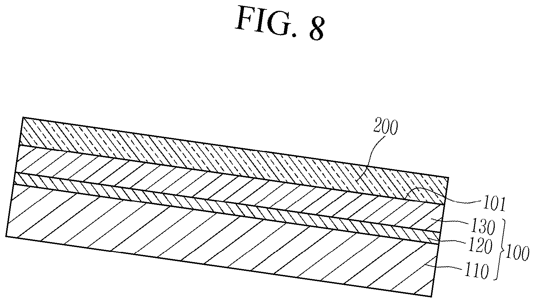

Referring to FIG. 8, in another embodiment a primer layer 120 including at least one of polymer and metal is formed on the surface of the polymer layer 110, and a metal layer 130 including a surface having protrusions and depressions 101 is formed on the surface of the primer layer 120.

The primer layer 120 may be formed on the surface of the polymer layer 110. A metal foil may be laminated on the primer layer 120 with adhesion to form the metal layer 130 on the surface of the primer layer 120. The surface of the metal layer 130 may be etched using at least one of a dry etching, a wet etching, and an electrolytic etching to form the surface of the metal layer 130 having protrusions and depressions 101 of the metal layer 130.

As another example, the primer layer 120 may be formed on the surface of the polymer layer 110. A metal layer 130 may be deposited on the primer layer 120 by using a deposition process such as CVD, PVD, or ALD. The surface of the metal layer 130 may be etched using at least one of a dry etching, a wet etching, and an electrolytic etching to form the surface of the metal layer 130 having protrusions and depressions 101.

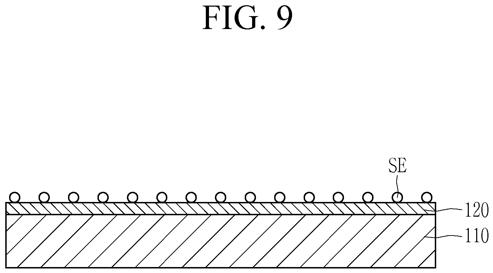

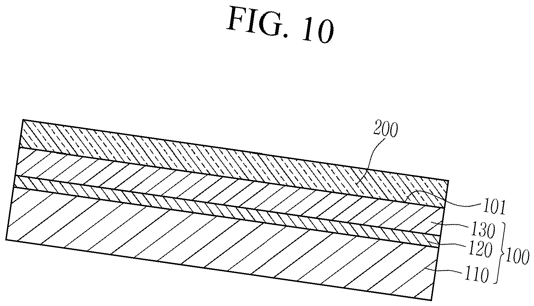

FIG. 9 and FIG. 10 are cross-sectional views showing another example of a method of manufacturing a dry electrode according to another embodiment.

Referring to FIG. 9 and FIG. 10, a primer layer 120 is formed on a polymer layer 110 surface, and a metal layer 130 including a surface having protrusions and depressions 101 is formed on the primer layer 120 surface.

The primer layer 120 is formed on the surface of the polymer layer 110, a seed SE is formed on the surface of the primer layer 120, and the seed SE on the surface of the primer layer 120 is electrolytically plated to form the metal layer 130 including the surface having protrusions and depressions 101. The surface including protrusions and depressions 101 of the metal layer 130 may be formed by controlling the electrolytic plating condition when a seed SE is formed on the surface of the primer layer 120 and then the seed SE is electrolytically plated to form the metal layer 130 on the surface of primer layer 120. The surface of the metal layer 130 having protrusions and depressions 101 may have a surface roughness corresponding to the arrangement of the seed SE formed on the surface of the primer layer 120.

The surface having protrusions and depressions 101 of the current collector 100 may have a surface roughness Ra ranging from 0.1 µm to 20 µm, but the disclosure is not limited thereto.

Referring again to FIG. 6, a free-standing film 200 is laminated directly on the surface having protrusions and depressions 101 of the current collector 100 (S200).

Specifically, the free-standing film 200 including an active material, a conductive material, and a fiberized binder is directly laminated on the surface having protrusions and depressions 101 of the current collector 100. Lamination between the current collector 100 and the free-standing film 200 may be performed by supplying the current collector 100 and the free-standing film 200 between pressurized rolls facing each other, but the present disclosure is not limited thereto. While the free-standing film 200 itself has no adhesive force, as the active material and the conductive material supported by the fiberized binder of the free-standing film 200 are fixed to the uneven structure on the surface having protrusions and depressions 101 of the current collector 100, the free-standing film 200 may be laminated directly on the surface having protrusions and depressions 101 of the current collector 100. Rather than the free-standing film 200 being laminated on the current collector 100 by increasing the surface area of the surface having protrusions and depressions 101 of the current collector 100, the active material and the conductive material supported by the fiberized binder of the free-standing film 200 are fixed to the uneven structure on the surface having protrusions and depressions 101 of the current collector 100, so that the free-standing film 200 may be laminated directly on the surface having protrusions and depressions 101 of the current collector 100.

In the method of manufacturing the dry electrode according to another embodiment, the free-standing film 200 is directly laminated on the surface having protrusions and depressions 101 of the current collector 100, so there is no need for a process to coat an adhesive layer on the current collector 100. Thus, the electrode manufacturing costs are reduced.

In addition, as the method of manufacturing the dry electrode according to another embodiment involves laminating the free-standing film 200 directly on the surface having protrusions and depressions 101 of the current collector 100, there is no need for an adhesive layer between the current collector 100 and the free-standing film 200. Thus, the amount of the active material included in the free-standing film 200 does not decrease across the entire thickness of the dry electrode, whereby the battery capacity is maximized.

The dry electrode manufacturing method is provided such that the manufacturing costs are reduced and the battery capacity per the thickness, the weight, and the volume of the dry electrode is maximized.

While this disclosure has been described in connection with what is presently considered to be practical embodiments, it is to be understood that the disclosure is not limited to the disclosed embodiments. On the contrary, the present disclosure includes various modifications and equivalent arrangements.

### <Description of symbols>

current collector 100, surface having protrusions and depressions 101, free-standing film 200

## Claims

1. A dry electrode comprising:
a current collector including a surface having protrusions and depressions; and
a free-standing film including an active material, a conductive material, and a fiberized binder, the free-standing film being laminated directly onto the surface of the current collector having protrusions and depressions.

2. The dry electrode as claimed in claim 1, wherein the current collector includes:
a polymer layer;
a primer layer positioned on a surface of the polymer layer; and
a metal layer positioned on a surface of the primer layer and including the surface having protrusions and depressions.

3. The dry electrode as claimed in claim 2, wherein the metal layer is laminated on the primer layer, optionally wherein the surface of the current collector having protrusions and depressions is etched.

4. The dry electrode as claimed in claim 2, wherein the metal layer is deposited on the primer layer, optionally wherein the surface having protrusions and depressions is etched.

5. The dry electrode as claimed in claim 2, wherein the metal layer is formed by providing a seed on the surface of the primer layer and then electrolytically plating the seed.

6. The dry electrode as claimed in claim 5, wherein the surface having protrusions and depressions has a surface roughness that corresponds to the placement of the seed.

7. The dry electrode as claimed in any one of claims 2 to 6, wherein the primer layer includes at least one of polymer and metal.

8. The dry electrode as claimed in any one of claims 1 to 7, wherein the surface having protrusions and depressions has a surface roughness Ra from 0.1 µm to 20 µm.

9. A method of manufacturing a dry electrode comprising:
forming a current collector surface having protrusions and depressions; and
directly laminating a free-standing film including an active material, a conductive material, and a fiberized binder on the surface of the current collector that includes the protrusions and depressions.

10. The method of manufacturing the dry electrode as claimed in claim 9, wherein forming the current collector surface having protrusions and depressions includes:
forming a primer layer on a polymer layer surface; and
forming a metal layer including the surface having protrusions and depressions on the primer layer surface.

11. The method of manufacturing the dry electrode as claimed in claim 10, wherein forming the metal layer including the surface having protrusions and depressions on the primer layer surface includes laminating the metal layer on the primer layer, optionally wherein forming the metal layer including the surface having protrusions and depressions on the primer layer surface further includes etching the metal layer to form the surface having protrusions and depressions.

12. The method of manufacturing the dry electrode as claimed in claim 10, wherein forming the metal layer including the surface having protrusions and depressions on the primer layer surface includes depositing the metal layer on the primer layer, optionally wherein forming the metal layer including the surface having protrusions and depressions on the primer layer surface further includes etching the metal layer to form the surface having protrusions and depressions.

13. The method of manufacturing the dry electrode as claimed in claim 10, wherein forming the metal layer including the surface having protrusions and depressions on the primer layer surface includes:
providing a seed on the surface of the primer layer; and
electrolytically plating the seed on the surface of the primer layer to form the metal layer, optionally wherein the surface having protrusions and depressions has a surface roughness that corresponds to the arrangement of the seed.

14. The method of manufacturing the dry electrode as claimed in any one of claims 10 to 13, wherein the primer layer includes at least one of a polymer and a metal.

15. The method of manufacturing the dry electrode as claimed in any one of claims 9 to 14, wherein the surface having protrusions and depressions has a surface roughness Ra from 0.1 µm to 20 µm.
